Europäisches Patentamt

**European Patent Office**

**Office européen des brevets**

(11) Numéro de publication: **0 138 658**
A1

# (12) DEMANDE DE BREVET EUROPEEN

(21) Numéro de dépôt: **84401798.8**

(22) Date de dépôt: **12.09.84**

(51) Int. Cl.⁴: **F 16 B 7/04, E 04 B 2/76**

(30) Priorité: **13.09.83 FR 8314505**

(43) Date de publication de la demande: **24.04.85**
**Bulletin 85/17**

(84) Etats contractants désignés: **BE DE GB IT SE**

(71) Demandeur: **Duroyaume, Philippe, 23, rue de Crimée,**
**F-75019 Paris (FR)**

(72) Inventeur: **Duroyaume, Philippe, 23, rue de Crimée,**
**F-75019 Paris (FR)**

(74) Mandataire: **Tanguy, Gilbert André, SOCIETE**
**INTERNATIONALE 19, rue de la Paix, 75002 Paris (FR)**

(54) **Dispositif d'assemblage de profilés.**

(57) L'invention concerne un dispositif d'assemblage du type pince de serrage, destiné à assembler au moins deux profilés, ce dispositif étant constitué d'une pièce support en forme de berceau et d'une pièce mobile montée à pivotement à l'intérieur de la pièce support et y maintenue en position de pré-assemblage par l'intermédiaire de moyens élastiques prenant appui d'une part sur la pièce pivotante (3) et d'autre part sur la pièce support, des moyens de positionnement (2) étant prévus pour déplacer en position de montage la pièce pivotante par rapport à la pièce support à l'encontre de l'action de moyens élastiques (4), en obtenant ainsi l'accrochage sur un profilé des moyens de serrage prévus respectivement dans des zones d'extrémité en regard des pièces support et pivotante. La pièce pivotante (3) comporte dans sa zone d'extrémité ne portant pas de moyens de serrage des moyens (3a) permettant de l'engager à pivotement dans des structures correspondantes (1b), prévues sur la pièce support (1).

DISPOSITIF D'ASSEMBLAGE DE PROFILES 0138658

La présente invention a pour objet un dispositif d'assemblage, du type pince de serrage, d'au moins deux profilés, ce dispositif étant utilisable pour le montage de n'importe quelle structure dans laquelle il est nécessaire d'assembler entre eux un ou plusieurs profilés, par exemple les structures des grands magasins et des grandes surfaces, les panneaux d'exposition, les meubles, les cloisons, les rayonnages, les stands extérieurs autonomes et analogues. Les profilés pouvant être assemblés par le dispositif de serrage de l'invention peuvent être en alliage d'aluminium, en acier, ou autres alliages présentant des caractéristiques mécaniques suffisantes pour être utilisés dans les applications sus-mentionnées. Ces profilés peuvent être peints ou recouverts de bois ou de matière synthétique, ils doivent être creux et présentent obligatoirement une gorge pour recevoir le dispositif d'assemblage de l'invention.

Dans la technique antérieure, il était déjà connu d'assembler à l'aide de dispositifs du type pince de serrage des profilés généralement en aluminium ou en alliage d'aluminium, pour former des structures du type cadre reliées entre elles et conçues pour être associées à des panneaux. Les pinces d'assemblage de l'art antérieur étaient constituées habituellement par un premier élément sur lequel était monté un second élément pivotant, grâce à un axe pivotant disposé approximativement aux deux tiers de la pièce support. Ces dispositifs présentaient un gros inconvénient, du fait qu'il n'était pas possible de solidariser le dispositif d'assemblage à au moins un profilé avant montage, et qu'il était généralement nécessaire d'utiliser une vis travaillant en compression pour permettre ce montage avant l'accrochage sur le second profilé. Ceci se traduisait par des pertes de temps relativement onéreuses du point de vue du coût de la main-d'oeuvre, lors des opérations de montage de profilés.

Par ailleurs le document FR-A 2.520.817 préconise l'utilisation d'une pince à came de coincement pour l'assemblage de profilés. Un tel agencement ne saurait être très fiable, étant donné qu'un système à came tend toujours à se desserrer lorsque les systèmes dans lesquels ils sont utilisés sont soumis à des vibrations.

La présente invention se propose d'obvier à ces inconvénients des pinces de serrage pour profilés de l'art antérieur en fournissant un dispositif de serrage de conception entièrement nouvelle et originale, permettant le montage préalable du dispositif d'assemblage sur l'un des profilés.

L'invention a plus précisément pour objet un dispositif d'assemblage du type pince de serrage, destiné à assembler au moins deux profilés, ce dispositif étant constitué d'une pièce support en forme de berceau et d'une pièce mobile montée à pivotement à l'intérieur de la pièce support et y maintenue en position de pré-assemblage par l'intermédiaire de moyens élastiques prenant appui d'une part sur la pièce pivotante et d' autre part sur la pièce support, des moyens de positionnement étant prévus pour déplacer en position de montage la pièce pivotante par rapport à la pièce support à l'encontre de l'action des moyens élastiques, en obtenant ainsi l'accrochage sur un profilé des moyens de serrage prévus respectivement dans des zones d'extrémité en regard des pièces support et pivotante, la pièce pivotante comportant dans sa zone d'extrémité ne portant pas de moyens de serrage, des moyens permettant de l'engager à pivotement dans des structures correspondantes prévues sur la pièce support, caractérisé en ce que les moyens de positionnement sont associés à l'élément d'assemblage et agencés pour permettre le montage préalable du dispositif d'assemblage sur l'un des profilés à assembler et sont constitués par l'élément de serrage comportant une partie filetée s'adaptant à un trou taraudé prévu dans la pièce pivotante, une partie intermédiaire en forme d'épaulement destinée à venir s'insérer entre la pièce pivotante et la pièce support, et une partie conçue pour recevoir un outil susceptible d'imprimer à l'élément de serrage un mouvement de vissage ou de dévissage, cette dernière partie étant destinée à venir s'insérer dans une structure appropriée d'un profilé, de façon à permettre un montage préalable du dispositif d'assemblage sur ledit profilé.

Le dispositif d'assemblage selon l'invention est en outre remarquable par les points suivants :

  - l'élément de serrage est une vis pas à droite, auquel cas le pré-assemblage et l'assemblage des profilés se fait par desserrage de cette vis, ou bien une vis pas à gauche, auquel cas le pré-assemblage et l'assemblage des profilés se fait par serrage;

  - la tête de vis est creuse et agencée pour recevoir une clé à pans, par exemple à six pans;

  - l'épaulement s'insérant entre la pièce support et la pièce pivotante est une collerette circulaire;

  - les moyens élastiques sont constitués par un clip dont les broches libres viennent en aboutement contre la base de la pièce pivotante, tandis que sont prévus sur ce clip deux prolongements latéraux destinés à venir s'insérer respectivement dans des logements de forme appropriée prévus dans les ailes de la pièce support;

  - la pièce pivotante est montée sur la pièce support par l'intermédiaire de pattes d'extrémité s'engageant dans des trous taversants prévue dans les ailes de la pièce support.

L'invention s'étend également aux unités d'assemblage obtenues à partir de profilés, et constituées par au moins un dispositif d'assemblage selon l'invention, associé à au moins un profilé.

L'invention sera mieux comprise à la lecture de la description suivante d'une forme de réalisation non limitative d'un dispositif d'assemblage de profilés, en se référant au dessin annexé dans lequel :

- la figure 1 est une vue en perspective éclatée du dispositif de serrage selon l'invention; et

- la figure 2 est une vue en coupe axiale longitudinale du dispositif de la figure 1 dans un assemblage de deux profilés.

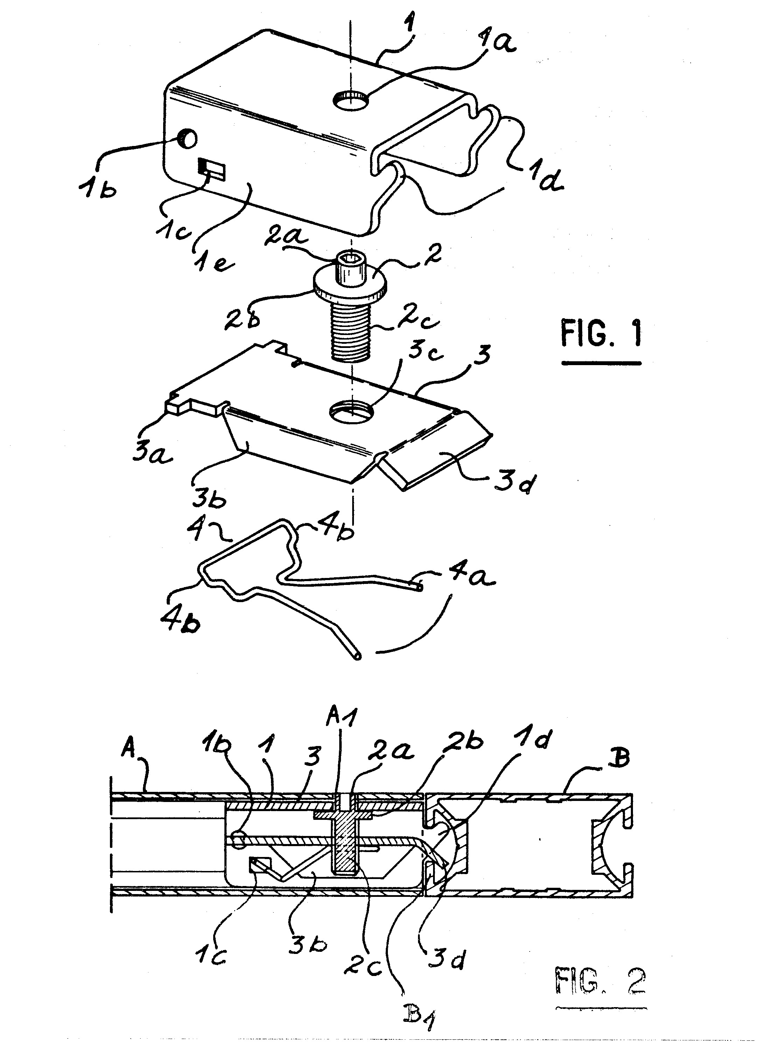

En se référant plus précisément à la figure 1, on voit que la pièce support ou berceau 1 a sensiblement la forme d'un U en coupe transversale, et est pourvue d'un alésage 1a dans sa base, tandis que sont prévus respectivement dans les ailes du berceau des alésages circulaires 1b et rectangulaires 1c. Le berceau 1 est également pourvu de pattes 1d faisant office de mâchoires de serrage.

Entre le berceau 1 et la pièce pivotante 3 est montée une vis de positionnement 2 comportant une tête 2a axialement creuse, une collerette circulaire 2b et une zone filetée 2c.

La pièce pivotante 3 comporte à une de ses extrémités des pivots latéraux 3a destinés à venir s'engager respectivement dans les alésages 1b prévus dans le berceau 1, deux ailes latérales de guidage 3b et un trou taraudé 3c de même filetage que la zone filetée 2c de la vis de positionnement 2. A l'extrémité opposée à celle présentant des pivots 3a, est prévue une mâchoire 3d conçue pour coopérer avec les pattes de serrage 1d de la pièce berceau 1.

Le dispositif d'assemblage de l'invention comporte également un clips 4 comportant deux bras 4a venant en appui contre la base de la pièce pivotante 3, ainsi que deux renflements latéraux 4b destinés à venir s'engager dans les trous traversants rectangulaires 1c prévus dans les ailes 1e du berceau 1.

Les différents éléments du dispositif d'assemblage décrit ci-dessus coopèrent de la manière suivante :

La pièce pivotante 3 est montée à pivotement à l'intérieur de la pièce 1 par engagement de ses pivots 3a à l'intérieur des alésages 1b prévus dans les ailes 1e du berceau 1. La vis de positionnement 2 est d'une part vissée dans le trou taraudé 3c de la pièce pivotante 3 et est

0138658

d'autre part engagée par sa tête 2a dans l'alésage 1a prévu dans la base du berceau 1. Le clips 4 est monté par ses prolongements latéraux 4b dans les trous traversants rectangulaires 1c prévus dans les ailes 1e du berceau 1. Ce clips 4 maintient ainsi conjointement avec la vis de positionnement 2 les deux pièces principales 1 et 3 du dispositif de serrage en position d'attente d'être montées dans un profilé avant l'assemblage proprement dit des profilés.

Comme représenté sur la figure 2, le dispositif de serrage de l'invention sert avantageusement à assembler deux profilés A et B. A cet effet, l'un des profilés, A sur la figure 2, est obligatoirement pourvu d'un alésage pour le passage de la tête 2a de la vis de positionnement et de serrage 2. Pour ce faire, on introduit le dispositif de serrage jusqu'à ce que la tête creuse 2a, avantageusement une tête de vis à six pans, vienne en coïncidence avec le trou A1 prévu dans une face du profilé A, puis on effectue une opération de desserrage à l'aide, par exemple d'une clé à six pans, de façon que l'extrémité de la tête 2a vienne s'engager dans la paroi du profilé A, permettant ainsi un accrochage préalable du dispositif de serrage de l'invention à l'intérieur dudit profilé.

Il ne reste plus alors qu'à mettre en place le profilé B et à desserrer la vis 2 de façon que ce mouvement de dévissage amène la pièce pivotante 3 à l'encontre de l'action du clips 4, dans une position d'accrochage de cette pièce pivotante 3 par l'intermédiaire de sa zone ou mâchoire de serrage 3d en position d'accrochage sur une lèvre B1 du profilé B, coopérant ainsi avec les pattes d'accrochage 1d du berceau 1 pour assembler le profilé A au profilé B. Le démontage des profilés se fait par une action de vissage toujours sur la tête creuse à six pans 2a de la vis de positionnement 2, afin de replacer le berceau 1 et la pièce pivotante 3 dans leur position d'origine.

De ce qui précède, on voit clairement qu'un des avantages primordiaux du dispositif de serrage selon la présente invention est de permettre un montage préalable du dispositif de serrage à l'intérieur d'un profilé, avant que ce profilé ne soit accroché à un autre profilé. Cette possibilité se traduit par un gain de temps appréciable lors des montages de différents profilés les uns aux autres, du fait que la vis de positionnement et de serrage est déjà mise en place à l'intérieur d'un des profilés, sans qu'il soit besoin de procéder à un ajustement supplémentaire.

Dans un mode de réalisation particulier, la pièce pivotante peut être en acier d'une seule pièce et avantageusement soumis à un ou plusieurs traitements spéciaux, par exemple une carbonitruration, une trempe, une cyanuration ou une cémentation, de façon à lui conférer les caractéristiques de résistance mécanique voulues. Cette pièce peut également être soumise à un cambrage de renfort latéral.

Dans la description ci-dessus de la vis de positionnement et de serrage 3, il est bien entendu que la fonction de traction des profilés l'un vers l'autre, lors de l'assemblage desdits profilés, est obtenue par un mouvement de dévissage, puisqu'il s'agit d'une vis pas à droite. Il est bien entendu qu'une vis de positionnement et de serrage pas à gauche peut être également utilisée, l'accrochage se faisant alors par vissage pour obtenir l'effet de traction désiré.

Il est clair que l'invention n'est nullement limitée à la forme de réalisation décrite ci-dessus en référence au dessin annexé, mais qu'elle englobe toutes les modifications et variantes à la portée de l'homme de l'art, issues du même principe de base.

6                    0138658

REVENDICATIONS

1. Dispositif d'assemblage du type pince de serrage, destiné à assembler au moins deux profilés, ce dispositif étant constitué d'une pièce support en forme de berceau et d'une pièce mobile montée à pivotement à l'intérieur de la pièce support et y maintenue en position de pré-assemblage par l'intermédiaire de moyens élastiques prenant appui d'une part sur la pièce pivotante et d'autre part sur la pièce support, des moyens de positionnement étant prévus pour déplacer en position de montage la pièce pivotante par rapport à la pièce support à l'encontre de l'action de moyens élastiques, en obtenant ainsi l'accrochage sur un profilé des moyens de serrage prévus respectivement dans des zones d'extrémité en regard des pièces support et pivotante, la pièce pivotante comportant dans sa zone d'extrémité ne portant pas de moyens de serrage, des moyens permettant de l'engager à pivotement dans des structures correspondantes prévues sur la pièce support, caractérisé par le fait que les moyens de positionnement (2) sont associés au dispositif d'assemblage et agencés pour permettre le montage préalable du dispositif d'assemblage sur l'un des profilés à assembler et sont constitués par un élément de serrage (2) comportant une partie filetée (2c) s'adaptant à un trou taraudé (3c) prévu dans la pièce pivotante (3), une partie intermédiaire en forme d'épaulement (2b) destinée à venir s'insérer entre la pièce pivotante (3) et la pièce support (1), et une partie ou tête (2a) conçue pour recevoir un outil susceptible d'imprimer à l'élément de serrage (2) un mouvement de vissage ou de dévissage, cette dernière partie étant destinée à venir s'insérer dans une structure appropriée (A1) d'un profilé (A), de façon à permettre un montage préalable du dispositif d'assemblage sur ledit profilé (A).

2. Dispositif d'assemblage selon la revendication 1, caractérisé en ce que l'élément de positionnement et de serrage est une vis pas à droite (2), auquel cas le pré-assemblage et l'assemblage des profilés se fait par desserrage de cette vis.

3. Dispositif d'assemblage selon la revendication 1, caractérisé en ce que l'élément de positionnement et de serrage est une vis pas à gauche, auquel cas le pré-assemblage et l'assemblage dés profilés se fait par serrage.

4. Dispositif de serrage selon l'une des revendications 1 à 3, caractérisé en ce que la tête (2a) de la vis (2) est creuse et agencée pour recevoir une clé à pans, par exemple à six pans.

5. Dispositif d'assemblage selon la revendication 1, caractérisé par le fait que l'épaulement s'insérant entre la pièce support (1) et la pièce pivotante (3) est une collerette circulaire (2b).

6. Dispositif d'assemblage selon la revendication 1, caractérisé par le fait que les moyens élastiques sont constitués par un clips (4) dont les branches libres (4a) viennent en aboutement contre la base de la pièce pivotante (3), tandis que sont prévus sur ce clips deux prolongements latéraux (4b) destinés à venir s'insérer respectivement dans des logements (1c) de forme appropriée prévus dans les ailes (1e ) de la pièce support 1.

7. Dispositif d'assemblage selon l'une des revendications précédentes, caractérisé par le fait que la pièce pivotante (3) est montée sur la pièce support (1) par l'intermédiaire de pattes latérales d'extrémité (3a) s'engageant dans des trous traversants (1b) prévus dans les ailes (1e) de la pièce support (1).

8. Unité d'assemblage obtenue à partir de profilés, caractérisée par le fait qu'elle est constituée par au moins un dispositif d'assemblage selon l'une des revendications 1 à 7, associé à au moins un profilé.

0138658

1/1

FIG. 1

FIG. 2

Office européen
des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | FR-A-2 520 817 (S. BRETECHE)<br><br>* Page 6, lignes 5-37; page 7, lignes 1-37; page 8, lignes 1-18; figures 2-4 *<br><br>--- | 1,5,6,8 | F 16 B 7/04<br>E 04 B 2/76 |
| A | FR-A-2 400 131 (J.F. SERGEANT)<br>* Page 1, lignes 33-36; page 2, lignes 1-36; figures 1,2 *<br><br>--- | 2-4 | |
| A | US-A-3 969 031 (K.G. KROOPP)<br><br>----- | | |

DOMAINES TECHNIQUES RECHERCHES (Int. Cl.4)

F 16 B
E 04 B
E 06 B

Le présent rapport de recherche a été établi pour toutes les revendications

| Lieu de la recherche | Date d'achèvement de la recherche | Examinateur |
|---|---|---|
| LA HAYE | 20-11-1984 | VAN WESTENBRUGGE A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03.82